# EUROPEAN PATENT SPECIFICATION

(11) **EP 0 879 677 B1**
(45) Date of publication and mention of the grant of the patent: **21.11.2001**
(21) Application number: 98830126.3
(22) Date of filing: 09.03.1998
(51) Int. Cl.: B24B 7/22, B24B 7/06, B24B 41/047, B24B 41/06, B23Q 7/03

(54) **A planing machine**
Abrichtmaschine
Planeuse

(30) Priority: 24.04.1997 IT MO970074
(43) Date of publication of application: 25.11.1998
(73) Proprietor: R.P. S.r.l., 42010 Roteglia (RE) (IT)
(72) Inventor: Giovanardi, Umberto, 42014 Castellarano (RE) (IT)
(74) Representative: Gotra, Stefano

(56) References cited:
- DE-B- 1 081 653
- US-A- 5 083 659
- US-A- 5 276 999

## Description

The invention relates to a planing machine, in particular for slabs, tiles and the like.

The prior art teaches planing machines, specially used for planing ceramic tiles in general and/or marble slabs, granite slabs, aggregates, which machines comprise a plurality of heads provided with frontal grinders or sanders, predisposed in a line to operate on tiles or slabs translated thereon with a predetermined infeed motion.

Prior art realisations exhibit numerous drawbacks and disadvantages. A first series of drawbacks originate in the conveying systems in use, which convey the slabs or tiles in ordered succession to positions below the various heads. These systems, when formed by articulated continuous conveyors, are subject to rapid hinge wear, which negatively influences the correct functioning of the transport system and inevitably requires expensive and frequent maintenance. Other drawbacks and disadvantages can be traced to the high number of work heads, each of which bears a planer, used in the prior art to carry out the planing process.

An unresolved problem in present continuous conveyors formed by rigid plates hinged consecutively one to another is constituted by the impossibility of keeping the plate or plates transported by the upper branch of the conveyor perfectly aligned when in the proximity of the drawing organ which gives them their necessary advancement motion.

The main aim of the present invention is to obviate the above-described drawbacks by providing a functionally simple and economical solution.

The stated aim is fully achieved by the present invention as it is defined in claim 1. The dependent claims 2-14 describe further embodiments of the invention.

Further characteristics and advantages of the present invention will better emerge from the detailed description that follows of a preferred but non-exclusive embodiment of the invention, illustrated purely by way of nonlimiting example in the accompanying figures of the drawings, in which:

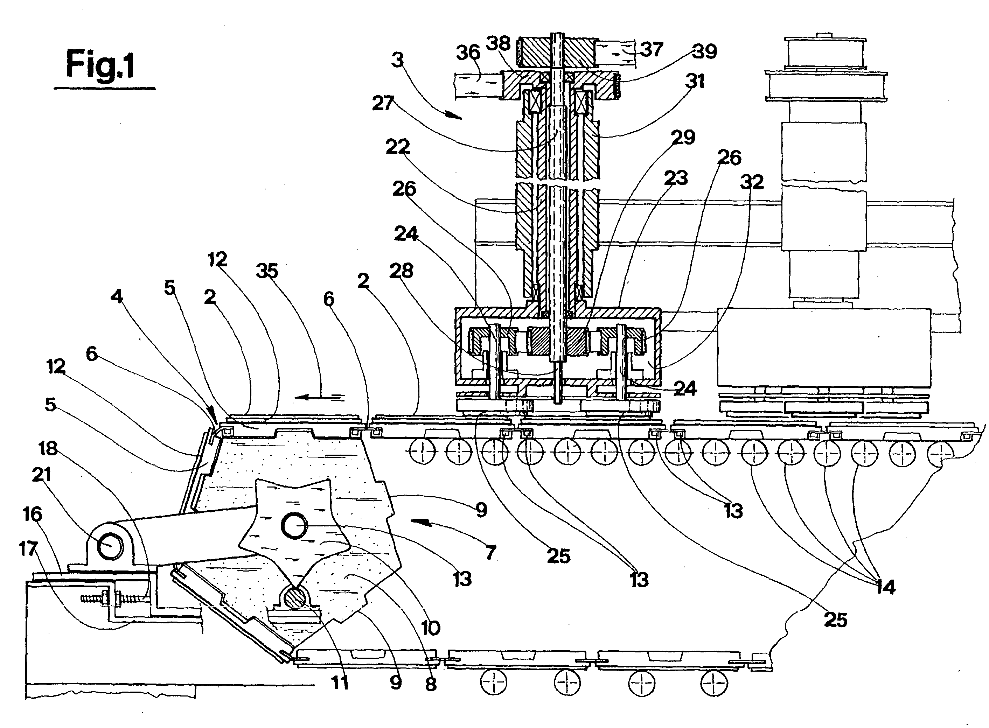

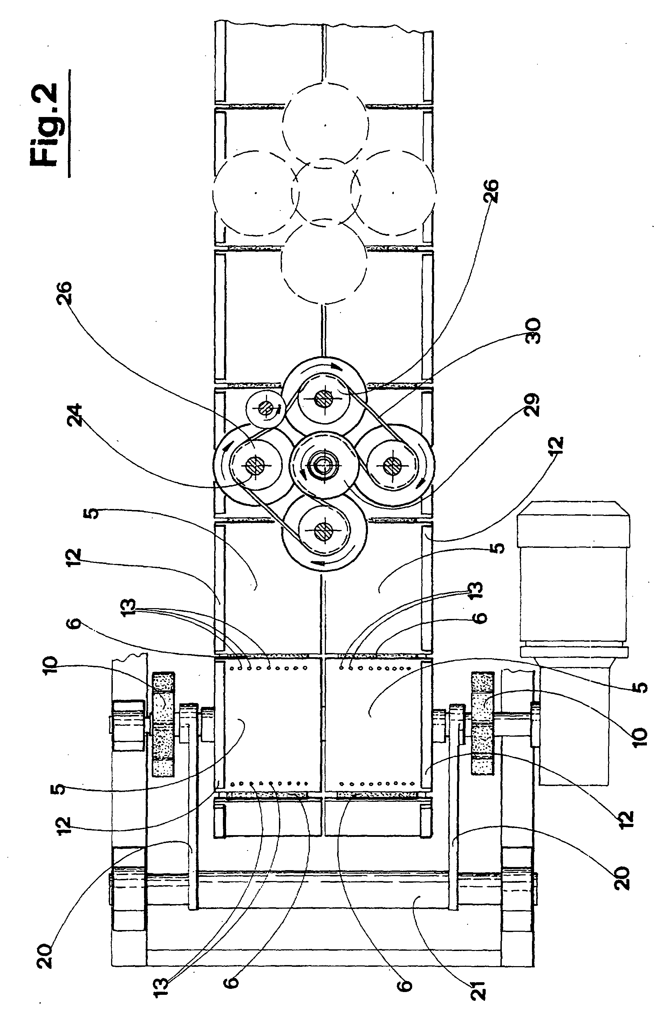

figure 1 shows the invention in a schematic lateral view in vertical elevation, partially sectioned according to line H-H of figure 2;
figure 2 shows a schematic plan view from above of the invention, partially section according to line I-I of figure 1.

With reference to the figures, 1 denotes in its entirety a planing line, constituted by a horizontal transport plane, along which slabs or tiles 2 which are to be planed are translated in a line, at a predetermined conveyor speed. The upper branch of a continuous slat conveyor 4 supports and transports the slabs or tiles. The slat conveyor 4 is formed by a plurality of slats 5 constrained one behind another by flexible joint elements 6. On the upper branch, the slats 5 rest on a roller plane formed by a plurality of identical rollers 14, situated at short distances one from another and arranged parallel, with horizontal axes perpendicular to the advancement direction of the slats, as schematically indicated by the arrow 35.The roller plane 14 has the task of supporting the slats 5 in movement, maintaining them on a fixed reference plane of the machine.

The slats 5 are identical and superiorly exhibit a rest surface for the slabs or tiles 2, which rest surface has low side walls 12, the height of which is lower than the height of a tile or slab 2. The connection between the slats 5 is realised by means of flexible joint elements 6, having a strip shape, and being preferably made of friction rubber and fixed to the slats by screws 13.

Transmission of motion to the conveyor 4 (and thus transport of the slats in the direction of arrow 35) is done by a drawing device 7 which comprises at least one wheel 8, on which the slat conveyor is partially wound. The drawing device 7 has a plurality of projecting drawing elements 9, in the form of cogs, angularly equidistanced and predisposed to interact mechanically with the slats 5, inserting perfectly into housings 15 afforded in the lower surface of the slats themselves. The arrangement of the drawing elements 9 on the wheel 8 is such that any two consecutive drawing elements 9 interact with two consecutive slats 5. The wheel 8 can be displaced in at least one direction which is perpendicular to said reference plane constituted by the roller plane 14. A cam 10 is provided, solidly constrained to the wheel 8, for this purpose. The cam 10 has its active surface resting on a fixed-axis roller 11 and is subdivided into a plurality of equal portions whose number is identical to the number of said drawing elements 9. The portions are also positioned at an angle with respect to the drawing elements 9 so that the joint element 6 joining the first slat 5 interacting with the wheel 8 and the slate adjacent thereto and not yet interacting with the wheel 8 is not displaced perpendicularly to the reference plane (i.e. the roller plane 14) by effect of the rotation of the wheel 8.

In other words, by effect of the rotation, the cam 10 produces a cyclical raising and lowering movement of the wheel 8 which compensates for the lowering and raising inflicted on the flexible joint element 6 joining the slat 5 engaged by the wheel 8 with the immediately following slat 5. This means that during the planing operation the configuration of the rest plane bearing the slats 5 and therefore the tiles or slabs 2 can be kept perfectly flat and constantly fixed. The possibility of vertical displacement is made constructively possible by the fact that the shaft 19 of the wheel 8 is supported at the free ends of two oscillating arms 20, forming a fork, which arms have the other two ends constrained one to another and hinged on a single pivot 21 having a rotation axis which is parallel to a rotation axis of the wheel 8.

In the illustrated embodiment, the wheel 8 has a regular polygonal shape (a pentagon in the example), in which a drawing element having the shape of a cog 9 is predisposed at the centre of each side. Each side of the regular polygon is predisposed so that part of the lower surface of each slat 5 rests thereon. Obviously the cam 10 is also subdivided into five equal portions.

The conveyor belt 4 is ring-wound and stretched between the wheel 8 represented in the enclosed figures and a similar wheel, not shown in the figures. The belt 4 tension can be screw-regulated using a screw 18 operating between the frame 17 of the machine and a support 16 on which the whole drawing train 7, comprising the wheel 8, the roller 11, the oscillating arms 20 and the pivot 21 with relative support to which the two arms are hinged, is mounted.

Two tool heads 3, aligned according to the direction indicated by arrow 35, bearing the tools for planing the slabs or tiles 2 resting on the slats 5 are arranged above the upper branch of the slat conveyor belt 4.

Each of the tool heads 3 comprises a first hollow spindle 22 bearing a mobile platform 23 to which a plurality of plane chuck spindles 24 are rotatably constrained, to each of which in turn a front-acting plane 25 is associated as well as a pulley 26.

A second spindle 27, provided with an internal coaxial channel 28, is predisposed coaxially internally and rotatably of the first spindle 22, and inferiorly bears a pulley 29.

The pulley 29, solid in rotation with the second spindle 27, draws the plane chuck spindles 24 in rotation by means of a belt transmission 30.

A tube (not illustrated) is inserted in the coaxial channel 28 of the second shaft 27, having the task of conveying a fluid (in the present embodiment, water) on to the slabs or tiles 2 predisposed on the slats 5 of the upper branch of the conveyor belt during planing.

The first spindle 22 is mounted rotatably internally of a sleeve 31 which is axially displaceable with respect to the frame 17 of the machine, in a parallel direction to the axis of said spindles 22 and 27, so that the planers 25 can be height-adjusted.

The first spindle 22 and the second spindle 27 are driven in rotation by separate mechanical transmissions 36 and 37 which engage pulleys 38 and 39, not shown in the figures.

The types of transmission used, which are independent, enable the rotation speed of the spindles 22 and 27 to be differentiated according to need.

The chuck spindles 24 of each drive head 3 are arranged in a crown fashion around the axis of the platform 23 and at a distance therefrom which is greater than half the external diameter of the pulley 26 which is solidly constrained to each chuck spindle 24, plus the external diameter of the pulley 29 being solidly constrained to said second spindle 27. In particular, the pulley 29 which is solidly constrained to the second spindle 27 functions as a drive pulley for the drive transmission, through belts 30, to the pulleys 26 which are solidly constrained to the chuck spindles 24.

Thus the working drive direction of a single drive head 3 on the slabs or tiles 2 results from the composition of the single planer 25 rotation directions about axes thereof and the orbital drive of the planers themselves about the rotation axis of the rotating platform 23.

The pulley 29 which is solidly constrained to the second spindle 27 and the pulleys which are solidly constrained to the chuck spindles 24, together with the transmission belts 30, are sealedly housed internally of a chamber 32 which is solidly associated to the platform. From the bottom side of the chamber 32 the following debouch: at the centre, the lower end of the second spindle 27 with the outlet mouth of the relative coaxial channel 28 and, peripherally, the lower ends of the chuck spindles 24 bearing the front-acting planers 25.

In this way the drive transmission from the second spindle 27 to the chuck spindles 24 can be protected, and the necessary liquid can be distributed centre-outwards on the slabs or tiles 2 being planed beneath the planers 25.

The belt drive transmission means that the noise level during functioning is kept low.

By arranging a plurality of planers 25, with drive directions as indicated, on a single head, it is possible to reduce (with respect to the prior art) the number of drive heads predisposed in series along the planing line 1 (i.e. the upper branch of the conveyor belt 4) of the tiles or slabs 2.

## Claims

1. A planing machine for slabs, tiles and the like, comprising:
a planing line (1) along which slabs, tiles and the like (2) are translated in a predetermined direction;
at least one tool head (3) bearing tools for planing, arranged superiorly to said predetermined direction, arranged above the planing line (1) and predisposed to operate on said slabs, tiles and the like (2) conveyed on said planing line (1); **characterised in that** said planing line (1) comprises:
a slat conveyor belt (4), formed by a plurality of slats (5) equidistanced and constrained one consecutively to another by flexible joint elements (6); said slat conveyor belt (4) exhibiting an upper branch on which are arranged means for supporting the slats (5) in movement, and maintaining said slats on a reference plane;
at least one drawing device (7) for transmission of drive to said conveyor belt (4), which device comprises: at least one wheel (8) on which said slat conveyor belt (4) is partially wound, having a plurality of drawing elements (9) which are angularly equidistanced one from another and which are predisposed for mechanically interacting with the slats (5), two consecutive drawing elements (9) interacting with two consecutive slats (5), said wheel (8) being constrained to make displacements which have at least one direction which is perpendicular to said reference plane; a cam (10) solidly constrained to the wheel (8) and exhibiting an active surface which rests on a fixed-axis roller (11) and which is subdivided into a plurality of parts a number of which is equal to a number of said drawing elements (9), said plurality of parts being angularly positioned with respect to the drawing elements (9) in such a way that the joint (6) connecting a first of the slats (5) interacting with the wheel (8) and a slat (5) which is adjacent thereto and not yet interacting with the wheel (8) is not subject to displacements that are perpendicular to said reference plane by effect of a rotation of the wheel (8).

2. The machine of claim 1, **characterised in that** said slats (5) superiorly exhibit a rest surface for the slabs, tiles and the like (2) which rest surface is laterally bordered by side walls (12).

3. The machine of claim 1, **characterised in that** said flexible joints (6) are strip-shaped, preferably made of rubber, and are fixed to the slats (5) by screws (13).

4. The machine of claim 1, **characterised in that** said means for supporting the slats (5) comprise a roller plane formed by a plurality of identical rollers (14), situated side-by-side at a short distance one from another and arranged parallel with axes perpendicular to the advancement movement of the belt (4).

5. The machine of claim 1, **characterised in that** said drawing elements (9) are cog-shaped and predisposed to engage in seatings (15) made in bottom surfaces of the slats (5).

6. The machine of claim 1, **characterised in that** said drawing device (7) is mounted on a support (16) a position of which with respect to the frame (17) of the machine is adjustable by means of a screw-adjustment (18) in the advancement direction of the belt (4).

7. The machine of claim 1, **characterised in that** said wheel (8) exhibits a shaft (19) supported at free ends of two oscillating arms (20) forming a fork, other ends of which arms (20) are reciprocally solidly constrained and hinged on a same pivot (21) having an axis which is parallel to a rotation axis of the wheel (8).

8. The machine of claim 1, **characterised in that** a peripheral surface of said wheel (8) is shaped as a regular polygon in which at a centre of each side thereof a drawing element (9) is predisposed.

9. The machine of claim 8, **characterised in that** each said side is predisposed in such a way that a part of the bottom surface of each said slat (5) rests thereon.

10. The machine of claim 1, **characterised in that** the drive head (3) comprises: a first hollow spindle (22) bearing a mobile platform (23) to which are rotatably supported a plurality of chuck spindles (24), each of which inferiorly bears a front-action planer (25) and is provided with a pulley (26); a second spindle (27), provided with a coaxial internal channel (28), rotatably and coaxially predisposed internally of said first spindle (22) and inferiorly bearing a pulley (29); rotation of the chuck spindles (24) being achieved by means of the pulley (2) which is solid in motion with said second spindle (27) by means of a belt transmission (30); the coaxial channel (28) of the second spindle (27) being provided for conveying a liquid on to the slabs, tiles and the like (2) arranged on said planing line (1); the first spindle (22) being rotatably mounted internally of a sleeve (31) which is axially slidable with respect to the frame (17) of the machine in a parallel direction to the axis of said first and second spindles (22 and 27); separate mechanical transmissions being provided for independently drawing in rotation, on command, said first spindle (22) and said second spindle (27).

11. The machine of claim 10, **characterised in that** the plurality of chuck spindles (24) are disposed crown-fashion about an axis of the platform (23) and at a distance therefrom which is greater than half an external diameter of the pulley (26) which is solidly associated to said spindle (24) combined with an external diameter of the pulley (29) which is solidly associated to said second spindle (27).

12. The machine of claim 11, **characterised in that** the pulley (29) solidly associated to said second spindle (27) functions as a drive pulley for drive transmission, by means of belts (30), to the pulleys (26), which are solidly associated to said chuck spindles (24).

13. The machine of claim 12, **characterised in that** the pulley (29) solidly associated to the second spindle (27) and the pulleys (26) solidly associated to said chuck spindles (24) together with the drive transmission belts (30) are sealedly housed internally of a chamber (32) which is solidly constrained to said platform (23); from the bottom surface of said chamber (32) there exit: at a centre of said bottom surface, a lower end of said second spindle (27) with an outlet mouth of a relative coaxial channel (28) and, peripherally of said bottom surface, a lower end of said chuck spindles (24) bearing the front-acting planers (25).

14. The machine of claim 10, **characterised in that** said separate mechanical transmissions for drawing independently in rotation, on command, the first spindle (22) and the second spindle (27), are of a belt-transmission type and act on pulleys (38), (39) fixed to upper ends of the first spindle (22) and the second spindle (27).

## Patentansprüche

1. Abrichtmaschine für Fliesen, Kacheln und ähnliches, enthaltend:
- eine Schleifbahn (1), entlang welcher die Fliesen, Kacheln und ähnliches (2) in einer festgelegten Richtung vorgeschoben werden;
- wenigstens einen die Werkzeuge zum Schleifen tragenden Werkzeugkopf (3), angeordnet oberhalb der genannten festgelegten Richtung über der Schleifbahn (1) und dazu vorgesehen, an den genannten Fliesen, Kacheln und ähnlichem (2) zu arbeiten, die auf der genannten Schleifbahn (1) transportiert werden;
**dadurch gekennzeichnet, dass** die genannte Schleifbahn (1) wie folgt enthält:
- ein Plattenförderband (4), gebildet aus einer Anzahl von Platten (5), welche abstandsgleich angeordnet und aufeinanderfolgend eine an der anderen durch flexible Verbindungselemente (6) gehalten werden; wobei das genannte Plattenförderband (4) einen oberen Trum aufweist, an welchem Mittel zum Halten der sich bewegenden Platten (5) angeordnet sind, wobei sie die genannten Platten auf einer Bezugsebene halten;
- wenigstens eine Zugvorrichtung (7) zum Übertragen der Antriebsbewegung auf das genannte Förderband (4), welche Vorrichtung enthält: wenigstens ein Rad (8), um welches das genannte Plattenförderband (4) zum Teil gewunden ist, und das eine Anzahl von Mitnehmerelementen (9) aufweist, welche winkelmässig abstandsgleich voneinander angeordnet und für ein mechanisches Zusammenwirken mit den Platten (5) vorgesehen sind, wobei zwei aufeinanderfolgende Mitnehmerelemente (9) mit zwei aufeinanderfolgenden Platten (5) zusammenwirken, wobei das genannte Rad (8) zum Ausführen von Verschiebungen gezwungen ist, welche wenigstens eine Richtung haben, die lotrecht zu der genannten Bezugsebene verläuft; eine Nocke (10), die fest an dem Rad (8) gehalten ist und eine aktive Oberfläche aufweist, welche auf einer Rolle (11) mit feststehender Achse liegt, und die in eine Anzahl von Abschnitten aufgeteilt ist, welche der Anzahl der genannten Mitnehmerelemente (9) entspricht, wobei die genannte Anzahl von Abschnitten im Verhältnis zu den Mitnehmerelementen (9) winkelmässig auf solche Weise positioniert ist, dass das Verbindungselement (6), das eine erste der mit dem Rad (8) zusammenwirkenden Platten (5) und eine Platte (5) miteinander verbindet, welche an diese angrenzt, aber noch nicht mit dem Rad (8) zusammenwirkt, durch die Wirkung der Umdrehung des Rades (8) keinen Verschiebungen lotrecht zu der genannten Bezugsebene unterliegt.

2. Maschine nach Patentanspruch 1, **dadurch gekennzeichnet, dass** die genannten Platten (5) an der Oberseite eine Auflagefläche für die Fliesen, Kacheln und ähnliches (2) aufweisen, welche Auflagefläche seitlich durch zwei Seitenwände (12) abgegrenzt ist.

3. Maschine nach Patentanspruch 1, **dadurch gekennzeichnet, dass** die genannten flexiblen Verbindungselemente (6) bandförmig ausgebildet und vorzugsweise aus Gummi hergestellt und mit Schrauben (13) an den Platten (5) befestigt sind.

4. Maschine nach Patentanspruch 1, **dadurch gekennzeichnet, dass** die genannten Mittel zum Halten der Platten (5) eine Rollenbahn enthalten, die aus einer Anzahl von identischen Rollen (14) gebildet wird, positioniert Seite an Seite mit einem kurzen Abstand voneinander, und parallel angeordnet mit den Achsen rechtwinklig zu der Vorschubbewegung des Bandes (4).

5. Maschine nach Patentanspruch 1, **dadurch gekennzeichnet, dass** die Mitnehmerelemente (9) zahnförmig ausgebildet und dazu vorgesehen sind, in die Sitze (15) zu greifen, die in die unteren Flächen der Platten (5) eingearbeitet sind.

6. Maschine nach Patentanspruch 1, **dadurch gekennzeichnet, dass** die genannte Zugvorrichtung (7) auf einem Support (16) montiert ist, dessen Position im Verhältnis zu dem Rahmen (17) der Maschine durch Stellschrauben (18) in der Vorschubrichtung des Bandes (4) eingestellt werden kann.

7. Maschine nach Patentanspruch 1, **dadurch gekennzeichnet, dass** das genannte Rad (8) eine Welle (19) aufweist, die von den freien Enden von zwei eine Gabel bildenden schwingenden Armen (20) getragen wird, wobei die anderen Enden der Arme (20) fest miteinander verbunden und an den gleichen Zapfen (21) angelenkt sind, der eine Achse hat, welche parallel zu einer Drehachse des Rades (8) verläuft,

8. Maschine nach Patentanspruch 1, **dadurch gekennzeichnet, dass** eine umlaufende Oberfläche des Rades (8) als ein gleichmässiges Vieleck ausgeformt ist, bei welchem in der Mitte von einer jeden Seite ein Mitnehmerelement (9) angeordnet ist.

9. Maschine nach Patentanspruch 8, **dadurch gekennzeichnet, dass** jede genannte Seite auf solche Weise vorgesehen ist, dass daran ein Teil der unteren Fläche einer jeden Platte (5) zum Anliegen kommt.

10. Maschine nach Patentanspruch 1, **dadurch gekennzeichnet, dass** der Antriebskopf (3) wie folgt enthält: eine erste Hohlspindel (22), die eine bewegliche Plattform (23) trägt, an welcher drehbar eine Anzahl von Spannspindeln (24) gehalten wird, von welchen jede an ihrem unteren Ende eine Frontschleifscheibe (25) hält und mit einer Riemenscheibe (26) versehen ist; eine zweite Spindel (27), versehen mit einem koaxialen, internen Kanal (28) sowie drehbar und koaxial im Inneren der genannten ersten Spindel (22) angeordnet und am unteren Ende eine Riemenscheibe (29) tragend; wobei die Umdrehung der Spannspindeln (24) mit Hilfe der Riemenscheibe (2) erhalten wird, welche durch eine Riemenübertragung in der Bewegung mit der genannten zweiten Spindel (27) verbunden ist; wobei der koaxiale Kanal (28) der zweiten Spindel (27) dazu bestimmt ist, eine Flüssigkeit auf die Fliesen, Kacheln und ähnliches (2) zu leiten, die auf der genannten Schleifbahn (1) angeordnet sind; wobei die erste Spindel (22) drehbar im Inneren einer Buchse (31) montiert ist, welche im Verhältnis zu dem Rahmen (17) der Maschine in einer parallelen Richtung zu den Achsen der ersten und zweiten Spindeln (22 und 27) gleitbar ist; und wobei separate mechanische Übertragungsmittel vorgesehen sind, um auf einen Antriebsbefehl hin die genannte erste Spindel (22) und die genannte zweite Spindel (27) unabhängig voneinander in Umdrehung zu versetzen.

11. Maschine nach Patentanspruch 10, **dadurch gekennzeichnet, dass** die Anzahl der Spannspindeln (24) kronenartig um eine Achse der Plattform (23) angeordnet sind und in einem Abstand von dieser, der grösser ist als die Hälfte des Aussendurchmessers der Riemenscheibe (26), die fest mit der genannten Spindel (24) verbunden ist, zusammen mit dem Aussendurchmesser der Riemenscheibe (29), welche fest mit der genannten zweiten Spindel (27) verbunden ist.

12. Maschine nach Patentanspruch 11, **dadurch gekennzeichnet, dass** die fest mit der genannten zweiten Spindel (27) verbundene Riemenscheibe (29) mit Hilfe von Riemen (30) als Antriebsscheibe für die Übertragung des Antriebs auf die Riemenscheiben (26) arbeitet, welche fest mit den genannten Spannspindeln (24) verbunden sind.

13. Maschine nach Patentanspruch 12, **dadurch gekennzeichnet, dass** die fest mit der zweiten Spindel (27) verbundene Riemenscheibe (29) und die fest mit den genannten Spannspindeln (24) verbundenen Riemenscheiben (26) zusammen mit den Riemen (30) zur Übertragung des Antriebs dicht abgeschlossen im Inneren einer Kammer (32) aufgenommen sind, welche fest von der genannten Plattform (23) gehalten wird, wobei aus der unteren Fläche der genannten Kammer (32) wie folgt herausragen: in der Mitte der genannten unteren Fläche ein unteren Ende der genannten zweiten Spindel (27) mit einer Auslassöffnung für einen entsprechenden koaxialen Kanal (28), und am Umlauf der genannten unteren Fläche die unteren Enden der genannten Spannspindeln (24), welche die Frontschleifscheiben (25) tragen.

14. Maschine nach Patentanspruch 10, **dadurch gekennzeichnet, dass** die genannten separaten mechanischen Übertragungsmittel, die auf einen Antriebsbefehl hin die genannte erste Spindel (22) und die genannte zweite Spindel (27) unabhängig voneinander in Umdrehung zu versetzen, von der Art einer Riemenübertragung sind und auf Riemenscheiben (38), (39) wirken, die an den oberen Enden der ersten Spindel (22) und der zweiten Spindel (27) befestigt sind.

## Revendications

1. Une planeuse pour dalles, carreaux et similaires, comprenant:
- une ligne d'aplanissement (1) le long de laquelle des dalles, carreaux et similaires (2) sont translatés dans une direction prédéterminée;
- au moins une tête motrice (3) supportant les outils d'aplanissement, disposée supérieurement à ladite direction prédéterminée et à la ligne d'aplanissement (1) pour opérer sur ledits dalles, carreaux et similaires (2) convoyés sur ladite ligne d'aplanissement (1);
**caractérisée en ce que** ladite ligne d'aplanissement (1) comprend:
- un tapis roulant à plaques (4), formé d'une pluralité de plaques (5) équidistantes et solidaires l'une de l'autre consécutivement par l'intermédiaire d'éléments de jointure flexibles (6); ledit tapis roulant à plaques (4) présentant une branche supérieure sur laquelle sont disposés des moyens pour supporter les plaques (5) en mouvement en les maintenant sur un plan de référence;
- au moins un dispositif de tirage (7) pour la transmission du mouvement audit tapis roulant (4), lequel dispositif comprend: au moins une roue (8) autour de laquelle ledit tapis roulant à plaques (4) est partiellement enroulé, ayant une pluralité d'éléments de tirage (9) qui sont angulairement équidistants l'un de l'autre et prédisposés pour interagir mécaniquement avec les plaques (5), deux éléments de tirage (9) consécutifs interagissant avec deux plaques (5) consécutives, ladite roue (8) étant fixée de manière à pouvoir accomplir des mouvements ayant au moins une direction perpendiculaire audit plan de référence; une came (10) solidaire de la roue (8) et présentant une surface active reposant sur un rouleau à axe fixe (11) et étant subdivisée en une pluralité de parties de nombre égal au nombre desdits éléments de tirage (9), ladite pluralité de parties étant angulairement positionnée par rapport aux éléments de tirage (9) de manière à ce que l'élément de jointure (6), reliant une première plaque (5) interagissant avec la roue (8) et une plaque (5) adjacente à celle-ci et n'interagissant pas encore avec la roue (8), ne soit pas sujet de mouvements perpendiculaires audit plan de référence par effet de la rotation de la roue (8).

2. La planeuse de la revendication 1, **caractérisée en ce que** lesdites plaques (5) présentent supérieurement une surface d'appui pour les dalles, carreaux et similaires (2), latéralement bordée de parois latérales (12).

3. La planeuse de la revendication 1, **caractérisée en ce que** lesdits éléments de jointure flexibles (6) sont en forme de bandes, préférablement en caoutchouc, et sont fixés sur les plaques (5) par l'intermédiaire de vis (13).

4. La planeuse de la revendication 1, **caractérisée en ce que** les moyens pour supporter les plaques (5) comprennent un plan à rouleaux formé d'un pluralité de rouleaux (14) identiques, disposés côte à côte à breve distance l'un de l'autre et parallèles entre eux avec des axes perpendiculaires au mouvement d'avancement du tapis roulant (4).

5. La planeuse de la revendication 1, **caractérisée en ce que** lesdits éléments de tirage (9) sont en forme de dents et sont prédisposés pour s'engager dans des logements (15) réalisés sur la surface inférieure des plaques (5).

6. La planeuse de la revendication 1, **caractérisée en ce que** ledit dispositif de tirage (7) est monté sur un support (16), la position duquel, par rapport au châssis (17) de la planeuse, est réglable au moyen d'un réglage à vis (18) dans la direction d'avancement du tapis roulant (4).

7. La planeuse de la revendication 1, **caractérisée en ce que** ladite roue (8) présente un arbre (19) supporté par les extrémités libres de deux bras oscillants (20) formant une fourche, les autres extrémités de ces bras (20) étant solidaires entre elles et fixées sur un même pivot (21) ayant un axe parallèle à l'axe de rotation de la roue (8).

8. La planeuse de la revendication 1, **caractérisée en ce qu'**une surface périphérique de ladite roue (8) est conformée en un polygone régulier sur lequel est prédisposé un élément de tirage (9) au centre de chacun de ses côtés.

9. La planeuse de la revendication 8, **caractérisée en ce que** chaque côté dudit polygone est prédisposé de manière à ce qu'une partie de la surface inférieure de chaque plaque (5) puisse y reposer.

10. La planeuse de la revendication 1, **caractérisée en ce que** la tête motrice (3) comprend: un premier arbre creux (22) supportant une plateforme mobile (23) supportant à son tour rotativement une pluralité d'arbres porte-meule (24), chacun desquels portant inférieurement une meule à action frontale (25) et étant pourvu d'une poulie (26); un second arbre (27), pourvu d'un canal interne coaxial (28), rotatif et prédisposé coaxialement à l'intérieur dudit premier arbre (22) et supportant inférieurement une poulie (29); la rotation des arbres porte-meule (24) étant réalisée au moyen de la poulie (29) solidaire en rotation avec lesdits seconds arbres (27) au moyen d'une courroie de transmission (30); le canal coaxial (28) du second arbre (27) étant conçu pour convoyer un liquide vers les dalles, carreaux et similaires (2) disposés sur ladite ligne d'aplanissement (1); le premier arbre (22) étant monté rotativement à l'intérieur d'un fourreau (31) axialement coulissant par rapport au châssis (17) de la planeuse dans une direction parallèle à l'axe desdits premier et second arbres (22 et 27); des transmissions mécaniques séparées étant prévues pour entraîner indépendamment en rotation, sur commande, ledit premier arbre (22) et ledit second arbre (27).

11. La planeuse de la revendication 10, **caractérisée en ce que** la pluralité d'arbres porte-meule (24) est disposée en forme de couronne autour d'un axe de la plateforme (23) et à une distance par rapport à celui-ci supérieure à la moitié de la somme du diamètre externe de la poulie (26), solidaire dudit arbre (24), et du diamètre externe de la poulie (29) solidaire dudit second arbre (27).

12. La planeuse de la revendication 11, **caractérisée en ce que** la poulie (29) solidaire dudit second arbre (27) fonctionne comme une poulie motrice pour la transmission du mouvement, au moyen de courroies (30), aux poulies (26) solidaires des arbres porte-meule (24).

13. La planeuse de la revendication 12, **caractérisée en ce que** la poulie (29) solidaire du second arbre (27), les poulies (26) solidaires desdits arbres portemeule (24) et les courroies de transmission (30) sont logés de manière étanche à l'intérieur d'une chambre (32) solidaire de ladite plateforme (23); de la surface inférieure de ladite chambre (32) sortant, au centre, une extrémité inférieure dudit second arbre (27) avec une bouche de sortie d'un relatif canal coaxial (28) et, périphériquement, une extrémité inférieure desdits arbres porte-meule (24) supportant les meules à action frontale (25).

14. La planeuse de la revendication 10, **caractérisée en ce que** lesdites transmissions mécaniques séparées pour entraîner indépendamment en rotation, sur commande, le premier arbre (22) et le second arbre (27), sont de type à courroie et agissent sur des poulies (38, 39) fixées sur les extrémité supérieures du premier arbre (22) et du second arbre (27).
